# EUROPEAN PATENT SPECIFICATION

(11) **EP 0 969 736 B1**
(45) Date of publication and mention of the grant of the patent: **28.06.2006**
(21) Application number: 97921649.6
(22) Date of filing: 20.05.1997
(51) Int. Cl.: A23J 3/34, A23J 3/30

(54) **A METHOD OF OBTAINING PROTEIN HYDROLYSATES**
VERFAHREN ZUR HERSTELLUNG VON PROTEINHYDROLYSATE
PROCEDE D'OBTENTION D'HYDROLYSATS DE PROTEINES

(30) Priority: 20.05.1996 DK 58596
(43) Date of publication of application: 12.01.2000
(73) Proprietor: Novozymes A/S, 2880 Bagsvaerd (DK)
(72) Inventor: NIELSEN, Per, Munk, DK-2880 Bagsvaerd (DK)
(86) International application number: PCT/DK1997/000230
(87) International publication number: WO 1997/043910

(56) References cited:
- EP-A- 0 480 104
- WO-A-91/13554
- US-A- 3 857 967
- US-A- 5 082 672
- STN INTERNATIONAL, File CAPLUS, CAPLUS Accession No. 1995:215075, MIMOUNI B. et al., "Combined Acid Deamidation and Enzymic Hydrolysis for Improvement of the Functional Properties of Wheat Gluten"; & J. CEREAL SCI., (1994), 20(2), 153-65. XP002969738

## Description

### TECHNICAL FIELD

The present invention relates to a method of obtaining protein hydrolysates useful as flavoring agents. More specifically, the invention provides a method of obtaining from a proteinaceous substrate a hydrolysate enriched in free glutamic acid and/or peptide bound glutamic acid residues, which method comprises the steps of subjecting the substrate to a deamidation process, and subjecting the substrate to the action of a specific acting proteolytic enzyme.

### BACKGROUND ART

Various food products, e.g. soups, sauces and seasonings, comprises flavoring agents obtained by hydrolysis of proteinaceous materials. Conventionally this hydrolysis is brought about using strong hydrochloric acid, followed by neutralization with sodium hydroxide. However, such chemical hydrolysis leads to severe degradation of the amino acids obtained during the hydrolysis, and also to hazardous byproducts formed in the course of this chemical reaction. Therefore increasing concern over the use of flavoring agents obtained by chemical hydrolysis has lead to the development of enzymatic hydrolysis processes.

Enzymatic hydrolysis processes aim at obtaining a high degree of hydrolysis (DH), and this is usually attained using a complex of unspecific acting proteolytic enzymes (i.e. unspecific acting endo- and exo-peptidases). In this way e.g. WO 94/25580 describes a method for hydrolyzing proteins by use of an unspecific acting enzyme preparation obtained from *Aspergillus oryzae.* Specific acting proteolytic enzymes have not been used for this purpose, because such enzymes only lead to an inadequate degree of hydrolysis.

Only relatively few specific acting proteolytic enzymes have been reported. Thus proteolytic enzymes preferentially cleaving peptides at glutamoyl-peptide bonds (Glu-specific proteases) obtained from *Staphylococcus aureus* [*Drapeau G R, Boily Y and Houmard J;* J. Biol. Chem. 1972 **247** (20) 6720-6726], from *Actinomyces sp. [Mosolova O V, Rudenskaya G N, Stepanov V M, Khodova O M and Tsaplina I A;* Biokhimiya 1987 **52** (3) 414-422], from *Streptomyces griseus [Yoshida N, Tsuruyama S, Nagata K, Hirayama K, Noda K and Makisumi S;* J. Biochem. 1988 **104** 451-456], from *Streptomyces thermovulgaris* [*Khaldarova N Y, Rudenskaya G N, Revina L P, Stephanov V M and Egorov N S;* Biochimiia Moscow Eng. 1989 **54** (1) 32-38], from *Bacillus subtilis [Niidome T, Yoshida N, Ogata F, Ito A and Noda K;* J. Biochem. 1990 108 965-970], and from *Bacillus licheniformis* [WO 91/13554 A1], have been reported.

Glu-specific proteases primarily find applications in studies of protein structures. However, use of a Glu-specific *Staphylococcus aureus* protease for modifying the solubility and structural properties of casein has been reported [*Chobert J-M, Sitohy M Z and Whitaker J R;* J. Agric. Food Chem. 1988 **36** 220-224], and WO 91/13554 A1 describes the use of the *Bacillus licheniformis* for obtaining a limited specific hydrolysis of proteins.

Whereas glutamine (Gln) is almost tasteless, glutamic acid (Glu), whether free or peptide bound, plays an important role for the flavor and palatability of protein hydrolysates. Glutamic acid may be formed by converting free glutamine to glutamic acid. This conversion (i.e. deamidation) is inherently taking place during conventional chemical hydrolysis using strong hydrochloric acid.

Alternatively glutamic acid may be formed from free glutamine by the action of a glutaminase (L-Glutaminase, EC 3.5.1.22 or D-Glutaminase, EC 3.5.1.35). However, substantial amounts of the glutamine may be lost as it spontaneously converts to pyroglutamine.

In contrast to glutaminase, peptidoglutaminase (PGases) acts on peptide bound glutamine. Two types of peptidogtutaminases are known. Peptidyl-glutaminase (EC 3.5.1.43; Peptidoglutaminase I) specific for glutamine substituted at the α-amino group, and Protein-glutamine glutaminase (EC 3.5.1.44; Peptidoglutaminase II) specific for glutamine substituted at the carboxyl position or both the α-amino and carboxyl positions. Peptidoglutaminases obtained from *Aspergillus japonicus, Bacillus circulans, Cryptococcus albidus,* and *Debaryomyces kloecheri* have been reported [*Kikuchi M & Sakaguchi K;* Agr. Biol. Chem. 1973 **37** (4) 719-724].

Peptidoglutaminases are known and useful for modifying food proteins. Structural modifications of proteins improve their functional properties and extends their use as food ingredients. Thus US 5,082,672 describes a method of treating food proteins by deamidation with a peptidoglutaminase, by which method the solubility, emulsfication, foaming and other functional properties of soy proteins become improved. However, US 5,082,672 also report that the ability of peptidoglutaminase to deamidate intact soy protein is limited due to its large molecular size and/or unique conformation. Therefore US 5,082,672 teach initial degradation of the substrate by hydrolysis with Alcalase™, an un-specific acting endo/exo-peptidase complex obtained from *Bacillus licheniformis,* and/or heat treatment, and find that pre- and post-heat treatment of hydrolyzed soy protein produced the greatest degree of deamidation.

US 3,857,867 describes a process for preparing food and beverages with a peptidoglutaminase obtained from *Bacillus circulans.* Also, in order to obtain the greatest degree of deamidation. US 3,857,967 teach initial degradation of the proteinaceous substrate by use of un-specific acting endo/exo-peptidases.

*Mimouni et al. [Mimouni B, Raymond J, Merie-Desnoyers AM, Azenza JL & Ducastaing A;* Journal of Cereal Science 1994 **21** 153-165] describe a combined acid deamidation and enzymatic hydrolysis for improvement of the functional properties of wheat gluten. More particularly, *Mimouni et al.* descnbe acid deamidation combined with the use of unspecific acting endo-peptidases.

### SUMMARY OF THE INVENTION

It has now been found that protein hydrolysates of excellent flavor and functionality can be obtained by subjecting the proteinaceous material to the combined action of a deamidation process and the action of a specific acting proteolytic enzyme.

Accordingly the present invention provides a method of obtaining from a vegetable proteinaceous substrate a hydrolysate enriched in free glutamic acid and/or peptide bound glutamic acid residues, which method comprises the steps of subjecting the substrate to deamidation by a peptidoglutaminase or a transglutaminase; and subjecting the substrate to the action of a specific acting proteolytic enzyme.

In a preferred embodiment, the invention provides a method for obtaining from a proteinaceous substrate a hydrolysate enriched in glutamic acid, which method comprises the steps of subjecting the substrate to the action a paptidoglutarninase and subjecting the substrate to the action of a proteolytic enzyme preferentially cleaving glutamoyl-peptide bonds, followed by the action of one or more unspecifically acting endo- and/or exo-peptidase enzymes.

### DETAILED DISCLOSURE OF THE INVENTION

The present invention relates to a method of obtaining from a proteinaceous substrate of vegetable origin a hydrolysate enriched in free glutamic acid and/or peptide bound glutamic acid residues, which method comprises the steps of
(i) subjecting the substrate to a deamidation process by subjecting the substrate to the action of a peptidoglutaminase or a transglutaminase; and
(ii) subjecting the substrate to the action of a specific acting proteolytic enzyme.

By the method of the invention protein hydrolysates of excellent flavor and functionality can be obtained. In particular protein hydrolysates of excellent flavor can be obtained because glutamic acid (Glu), whether free or peptide bound, plays an important role for the flavor and palatability of protein hydrolysates. However, by the method of the invention protein hydrolysates of improved functionality can also be obtained, in particular with respect to improved solubility, improved emulsifying properties, increased degree of hydrolysis and improved foaming properties.

### Deamidation Processes

The conversion of amides (glutamine or asparagine) into charged acids (glutamic acid or aspartic acid) via the liberation of ammonia is known as deamidation. Deamidation may take place as a non-enzymatic or as an enzymatic deamidation process.

In the present invention enzymatic deamidation is carried out by subjecting the substrate to the action of a transglutaminase or the action of a peptidoglutaminase.

### Transglutaminases

In a preferred embodiment the deamidation is carried out as an enzymatic deamidation process in which the substrate is subjected to the action of a transglutaminase. The transglutaminase may be of any convenient source including those derived from mammals, see e.g. JP 1050382 and JP5023182, including activated Factor XIII, see e.g. WO 93/15234: those derived from fish, see e.g. EP 555.649: and those derived from microorganisms, see e.g. EP 379.606, WO 96/06931 and WO 96/22366.

In another specific embodiment, the transglutaminase is derived from an Oomycete, including a strain of *Phytophthora,* in particular *Phytophthora cactorum,* a strain of *Pythium,* in particular *Pythium irregulare, Pythium sp., Pythium intermedium. Pythium ultimum,* and *Pythium periilum* (or *P. periplocum).*

In yet another specific embodiment, the transglutaminase is of bacterial origin and is preferably derived from a strain of *Bacillus,* in particular *Bacillus subtilis,* a strain of *Streptoverticillium,* in particular *Streptoverticillium mobaraensis, Streptoverticillium griseocameum, Streptoverticillium cinnamoneum,* and a strain of *Streptomyces,* in particular *Streptomyces lydicus.*

The transglutaminase shall be added to the proteinaceous substrate in effective amounts. The transglutaminase may be added in amounts conventionally employed in deamidation processes. It is at present contemplated that an effective amount of transglutaminase is in the range of from about 0.01 to about 5 % (w/w) of enzyme preparation relating to the amount of substrate, preferably in the range of from about 0.1 to about 1 % (w/w) of enzyme preparation relating to the amount of substrate.

The enzymatic treatment (incubation) may take place at any convenient temperature at which the enzyme preparation does not become inactivated, preferably in the range of from about 20°C to about 70°C.

In accordance with established practice the enzyme preparation may suitably be inactivated by increasing the temperature of the incubation mixture to a temperature where the enzymes become inactivated, e.g. to above about 70°C, or similarly by decreasing the pH of the incubation mixture to a value where the enzymes become inactivated, e.g. below about 4.0.

### Peptidoglutaminases

The deamidation is carried out as an enzymatic deamidation process in which the substrate is subjected to the action of a peptidoglutaminase.

In a more specific embodiment, the peptidoglutaminase used in the method of the invention may be a peptidoglutaminase I (peptidyl-glutaminase; EC 3.5.1.43), or a peptidoglutaminase II (protein-glutamine glutaminase; EC 3.5.1.44), or any mixture hereof. The peptidoglutaminase may be derived from a strain of *Aspergillus,* in particular a strain of *Aspergillus japonicus,* a strain of *Bacillus,* in particular a strain of *Bacillus circulans,* a strain of *Cryptococcus,* in particular a strain of *Cryptococcus albidus,* or a strain of *Debaryomyces,* in particular a strain of *Debaryomyces kloecheri.*

The peptidoglutaminase shall be added to the proteinaceous substrate in effective amounts. The peptidoglutaminase may be added in amounts conventionally employed in deamidation processes. It is at present contemplated that an effective amount of peptidoglutaminase is in the range of from about 0.01 to about 100.000 PGase Units per 100 g of substrate, in particular in the range of from about 0.1 to about 10.000 PGase Units per 100 g of substrate.

The enzymatic treatment (incubation) may take place at any convenient temperature at which the enzyme preparation does not become inactivated, preferably in the range of from about 20°C to about 70°C.

In accordance with established practice the enzyme preparation may suitably be inactivated by increasing the temperature of the incubation mixture to a temperature where the enzymes become inactivated, e.g. to above about 70°C, or similarly by decreasing the pH of the incubation mixture to a value where the enzymes become inactivated, e.g. below about 4.0.

### Specific Acting Proteolytic Enzymes

The method of the invention comprises the step of subjecting the substrate to the action of a specific acting proteolytic enzyme. More specifically the specific acting proteolytic enzyme may be a specific acting endo-peptidase or a specific acting exo-peptidase. The specific acting proteolytic enzyme may be of any available source.

### Endo-peptidases

In a preferred embodiment the specific acting proteolytic enzyme is an endopeptidase such as
(i) a glutamyl endopeptidase (EC 3.4.21.19);
(ii) a lysyl endopeptidase (EC 3.4.21.50);
(iii) a leucyl endopeptidase (EC 3.4.21.57);
(iv) a glycyl endopeptidase (EC 3.4.22.25);
(v) a prolyl endopeptidase (EC 3.4.21.26);
(vi) trypsin (EC 3.4.21.4) or a trypsin-like (lysine/arginine specific) endopeptidase; or
(vii) a peptidyl-Asp metalloendopeptidase (EC 3.4.24.33).

The glutamyl endopeptidase (EC 3.4.21.19) of item (i) i.e. a proteolytic enzyme preferentially cleaving glutamoyl-peptide bonds, may preferably be derived from a strain of *Bacillus,* in particular *Bacillus licheniformis* and *Bacillus subtilis,* a strain of *Staphylococcus,* in particular *Staphylococcus aureus,* a strain of *Streptomyces,* in particular *Streptomyces thermovulgaris* and *Streptomyces griseus,* or a strain of *Actinomyces sp.*

The lysyl endopeptidase (EC 3.4.21.50) of item (ii) may preferably be derived from a strain of *Achromobacter,* in particular *Achromobacter lyticus,* a strain of *Lysobacter,* in particular *Lysobacter enzymogenes,* or a strain of *Pseudomonas,* in particular *Pseudomonas aeruginosa.*

The leucyl endopeptidase (EC 3.4.21.57) of item (iii) may be of plant origin.

The glycyl endopeptidase (EC 3.4.22.25) of item (iv) may preferably be derived from the papaya plant (*Carica papaya).*

The prolyl endopeptidase (EC 3.4.21.26) of item (v) may preferably be derived from a strain of *Flavobacterium,* or it may be of plant origin.

The trypsin-like endopeptidase of item (vi) may preferably be derived from a strain of *Fusarium,* in particular *Fusarium oxysporum,* e.g. as described in WO 89/06270 or WO 94/25583.

The peptidyl-Asp metalloendopeptidase (EC 3.4.24.33) of item (vii) may preferably be derived from a strain of *Pseudomonas,* in particular*Pseudomonas fragi.*

### Exo-peptidases

In another preferred embodiment the specific acting proteolytic enzyme is an exo-peptidase enzyme that may act from either ends of the peptide, i.e. may be a aminopeptidase or it may be a carboxypeptidase.

In a preferred embodiment, the specific acting proteolytic enzyme is an aminopeptidase such as
(i) a leucyl aminopeptidase (EC 3.4.11.1); or
(ii) a tripeptide aminopeptidase (EC 3.4.11.4).

In another preferred embodiment, the specific acting proteolytic enzyme is a carboxypeptidase such as
(i) a proline carboxypeptidase (EC 3.4.16.2);
(ii) a carboxypeptidase A (EC 3.4.17.1);
(iii) a carboxypeptidase B (EC 3.4.17.2);
(iv) a carboxypeptidase C (EC 3.4.16.5);
(v) a carboxypeptidase D (EC 3.4.16.6);
(vi) a lysine(arginine) carboxypeptidase (EC 3.4.17.3);
(vii) a glycine carboxypeptidase (EC 3.4.17.4);
(viii) an alanine carboxypeptidase (EC 3.4.17.6);
(ix) a glutamate carboxypeptidase (EC 3.4.17.11);
(x) a peptidyl-dipeptidase A (EC 3.4.15.1); or
(xi) a peptidyl-dipeptidase (EC 3.4.15.5).

The specific acting endo- or exo-peptidase enzyme shall be added to the proteinaceous substrate in a effective amount. The proteolytic may be added in amounts conventionally employed in protein hydrolysis processes. It is at present contemplated that an effective amount of endo-peptidase is in the range of from about 0.05 to about 15 CPU/100 g of substrate, in particular in the range of from about 0.1 to about 5 CPU/100 g of substrate, and an effective amount of exo-peptidase is in the range of from about 0.001 to about 0.5 AU/100 g of substrate, in particular in the range of from about 0.01 to about 0.1 AU/100 g of substrate.

The enzymatic treatment (incubation) may take place at any convenient temperature at which the enzyme preparation does not become inactivated, preferably in the range of from about 20°C to about 70°C.

In accordance with established practice the enzyme preparation may suitably be inactivated by increasing the temperature of the incubation mixture to a temperature where the enzymes become inactivated, e.g. to above about 70°C, or similarly by decreasing the pH of the incubation mixture to a value where the enzymes become inactivated, e.g. below about 4.0.

### Unspecific Acting Proteolytic Enzymes

In a more specific embodiment, the method of the invention comprises the additional step of
(iii) subjecting the substrate to the action of one or more unspecific acting endo- and/or exo-peptidase enzymes.

In this step the substrate is subjected to a conventional hydrolysis step. This additional step may take place simultaneously with steps (i) and (ii), or it may be accomplished subsequent to steps (i) and (ii). In particular the substrate may be the reaction mixture of steps (i) and (ii).

In a preferred embodiment the unspecific acting endo- and/or exo-peptidase enzyme is derived from a strain of *Aspergillus,* in particular a strain of *Aspergillus niger,* a strain of *Aspergillus oryzae,* or a strain of *Aspergillus soyae,* or a strain of *Bacillus,* in particular a strain of *Bacillus amyloliquefaciens,* a strain of *Bacillus lentus,* a strain of *Bacillus licheniformis* or a strain of *Bacillus subtilis.*

The unspecific acting endo- and/or exo-peptidase enzyme is added to the substrate in amounts in the range of from about 0.05 to about 15 CPU/100 g of substrate, in particular in the range of from about 0.1 to about 5 CPU/100 g of substrate.

The enzymatic treatment (incubation) may take place at any convenient temperature at which the enzyme preparation does not become inactivated, preferably in the range of from about 20°C to about 70°C.

In accordance with established practice the enzyme preparation may suitably be inactivated by increasing the temperature of the incubation mixture to a temperature where the enzymes become inactivated, e.g. to above about 70°C, or similarly by decreasing the pH of the incubation mixture to a value where the enzymes become inactivated, e.g. below about 4.0

### Proteinaceous Substrates

The proteinaceous substrate subjected to the method of the present invention may consist of intact proteins, or it may consist of pre-hydrolyzed proteins (peptides), or it may be a mixture hereof.

the proteinaceous substrate is of vegetable origin, and may in particular be soy protein, grain protein, e.g. wheat gluten, com gluten, barley, rye, oat, rice, zein, cotton seed protein, rape seed protein, peanut, alfalfa protein, pea protein, fabaceous bean protein, sesame seed protein, or sunflower.

### Industrial Applications

The hydrolysates enriched in free glutamic acid and/or peptide bound glutamic acid residues obtained by the method of the invention may be used in various industrial applications, in particular where there is a need for the incorporation of functional proteins.

Therefore, in another aspect, the present invention provides a food product comprising a hydrolysate enriched in free glutamic acid and/or peptide bound glutamic acid residues obtained by the method of the invention.

In yet another aspect, the invention provides an animal feed additive comprising a hydrolysate enriched in free glutamic acid and/or peptide bound glutamic add residues obtained by the method of the invention.

### Assay for Enzymatic Activity

### Peptidoglutaminase Activity

The peptidoglutaminase activity may determined according to the procedure *of Cedrangoro et al.* [*Cedrangoro et al*.; Enzymologia 1965 **29** 143], and as described in US 3,857,967.

According to this method, 0.5 ml of an enzyme sample, adjusted to pH 6.5 with 1N NaOH. Is charged into a small vessel. Following the procedure of *Cedrangoro et al.,* 1 ml of a borate buffer solution, pH 10.8, is added to the vessel, the discharged ammonia is absorbed by 5N sulphuric acid, and the mixture is allowed to form colour by use of Nessler's reagent, and the light absorptivity of the formed colour is measured at 420 mγ.

One PGase unit is the amount of enzyme capable of producing 1 γmol/minute of ammonia under these conditions.

Alternatively, the peptidoglutaminase activity may determined according to the procedure described in Example 2, below.

### Proteolytic Activity: Casein Protease Units (CPU)

The proteolytic activity may be determined using casein as substrate. One Casein Protease Unit (CPU) is defined as the amount of enzyme liberating 1 mM of primary amino groups (determined by comparison with a serine standard) per minute under standard conditions, i.e. incubation for 30 minutes at 25°C and pH 9.5.

A folder AF 228/1 describing this analytical method in more detail is available upon request to Novo Nordisk A/S, Denmark, which folder is hereby included by reference.

### Proteolytic Activity: Anson Units (AU)

The proteolytic activity may alternatively be determined with denatured haemoglobin as substrate. In the Anson-Haemoglobin method for the determination of proteolytic activity denatured haemoglobin is digested, and the undigested haemoglobin is precipitated with trichloroacetic acid (TCA). The amount of TCA soluble product is determined with phenol reagent, which gives a blue colour with tyrosine and tryptophan.

One Anson Unit (AU) is defined as the amount of enzyme which under standard conditions (i.e. 25°C, pH 7.5 and 10 min. reaction time) digests haemoglobin at an initial rate such that there is liberated per minute an amount of TCA soluble product which gives the same colour with phenol reagent as one milli-equivalent of tyrosine.

A folder AF 4/5 describing the analytical method in more detail is available upon request to Novo Nordisk A/S, Denmark, which folder is hereby included by reference.

### Proteolytic Activity: Leucine Amino Peptidase Units (LAPU)

The proteolytic activity may alternatively be determined with leucine-p-nitroanilide as substrate. Upon hydrolysis p-nitroanilide is liberated turning the solution yellow. The activity is determined using p-nitroanilide as chromophore, the yellow colour produced being photometered at 405 nm.

1 Leucine Amino Peptidase Unit (LAPU) is the amount of enzyme which decomposes 1 µ(micro)M substrate per minute at the following conditions: 26 mM of L-leucine-p-nitroanilide as substrate, 0.1 M Tris buffer (pH 8.0), 40°C, 10 minutes reaction time.

### EXAMPLES

The invention is further illustrated in the following examples.

### Example 1

### Increased Protein Solubility and Release of Glutamate by Deamidation

### Hydrolysis

Wheat gluten (WG) was obtained from Cargill (JOB 5141) and deamidated wheat gluten (DWG) was obtained from StaPro Consultancy B.V., Lemdijk 32, 9422 TH Smilde, NL. Suspensions of 8 % protein were made by mixing 11 g of gluten with 89 g of water. The pH was adjusted to 6.5 with NaOH. Glutamate/aspartate specific protease (SP446), obtainable as described in WO 91/13554, or lysine/arginine specific protease (SP387) obtainable as described in WO 89/06270, was added to the suspensions. The dosage was 0.01 AU/g protein for SP446 and 0.006 AU/g protein for SP387. Flavourryme™ (an un-specifically acting protease preparation available from Novo Nordisk A/S, Denmark, containing endo- and exo-peptidase activities, and obtained by fermentation of *Aspergillus oryzae)* was added to some of the hydrolysates at a dosage of 20 LAPU/g protein. The hydrolyses were carried out at 50°C without further pH adjustment for 18 hours. The enzymes were inactivated by heating at 85°C for 15 minutes. The pH was adjusted to 5 and the hydrolysates centrifuged. The content of protein and free glutamate in the supernatant was determined.

### Determination of protein

Protein was determined by Kjeldahl analysis, using a Kjeldahl factor of 6.25.

### Determination of glutamate

The content of free glutamate was determined by use of the Boehringer-Mannheim kit for glutamate determination (Cat. No. 139 092). The method was adapted for use in microtiter plates.

### Results

| Hydrolysate | Protein solubility % | | Glutamate Content mg/l | |
|---|---|---|---|---|
| | WG | DWG | WG | DWG |
| SP446 | 18 | 54 | 0 | 0 |
| SP387 | 35 | 44 | 0 | 0 |
| SP446+ Flavourzyme™ | 34 | 87 | 1000 | 2000 |

When comparing wheat gluten (WG) to deamidated wheat gluten (DWG), the results show that deamidation increase the susceptibility of the gluten to specific proteases, such that more protein becomes soluble. By addition of Flavourzyme™ on top of a specific protease the release of glutamate is doubled due to deamidation.

### Example 2

### Enzymatic Deamidation and Release of Glutamate

### Fermentation of Bacillus circulans

*Bacillus circulans* cultures of the strain ATCC 21590 were grown in shake flasks of 400 ml capacity containing 200 ml of a medium composed of 1% polypeptone; 0.5 % lactose; 0.025 % MgSO₄ *7 H₂O; 0.005 % FeSO₄*7H₂O; 0.025 % KH₂PO₄; and 17% Na₂HPO₄* 12H₂O, with the pH adjusted to 7.2. Fermentation took place at 30°C for 20 hours using a stirring of 270 rpm. The cells were harvested by centrifugation at 4000 rpm in 1 litre flasks. The cells were frozen.

### Purification of Peptidoglutaminase II from Bacillus circulans

All steps were performed at room temperature.

The frozen *Bacillus circulans* cells were thawed and suspended in Lysis buffer (50 mM Tris/HCl; 25% (w/v) sucrose; 1 mM EDTA, pH 8.0) until a homogeneous suspension was obtained - 100 g wet cells per litre Lysis buffer. Lysozyme™ (Fluka 62971, 10 mg/ml) and DNAse I (Sigma DN-25, 10 mg/ml) were dissolved in Lysis buffer. 100 ml Lysozyme™ solution, 10 ml 1.0M MgCl2, and 1 ml DNAse I solution were added per litre cell suspension. The enzymes were allowed to act for 1 hour.

The suspension was filtered through a Seitz depth filter plate and the filtrate was transferred to a 10 mM KH2PO4/NaOH, pH 8.0 (Buffer A) on a Sephadex G25 column (Pharmacia). The enzyme solution was applied to a SOURCE Q column (Pharmacia) equilibrated in Buffer A and eluted with a linear NaCl gradient (0 → 500mM) in Buffer A. Fractions from the column were analysed for Peptidoglutaminase II activity as described below and fractions with activity were pooled. The absorbance of the pooled fractions at 280 nm was 1.78, thus the protein content was estimated to 1.8 mg/ml.

The purity of the protein in the Peptidoglutaminase II pool was approx. 25 % as judged from a SDS-PAGE gel. Thus the preparation contained approximately 0.5 mg/ml of pure peptidoglutaminase II.

### Peptidoglutaminase Assay Method

The enzymatic activity is determined by measuring the ammonia formed during hydrolysis of γ-carboxyamide of N-tert-Butoxycarbonyl (N-t-BOC-Gln-Pro; SIGMA No. B-4403) using the Boehringer-Mannheim kit for ammonia determination (Cat. No. 1112732). In this kit, ammonia is measured by determination of the consumption of NADH by glutamate dehydrogenase, and blanks without the addition of N-t-BOC-Gln-Pro were also applied in order to subtract the effect of other NADH consuming enzymes.

### Wheat Gluten Hydrolysis

200 mg of wheat gluten protein was added 9 ml of boiling water and after cooling, pH was adjusted to 7.0. Then 250 µl of the peptidoglutaminase II preparation (PEP) described above was added . The glutamate/aspartate specific protease (SP446) from example 1 was added in an amount of 0.04 AU/g protein, and. Flavourzyme™ from example 1 was added at in an amount of 20 LAPU/g protein.

Hydrolysis proceeded without pH adjustment for 18 hours at 50°C. Blanks without addition of peptidoglutaminase were produced. The hydrolysates were centrifuged and glutamate was measured as described in Example 1.

The degree of hydrolysis (DH) of the wheat gluten protein was determined as described below

### Determination of the Degree of Hydrolysis (DH)

The DH of the protein, defined as described in by *Adler-Nissen* [*Adler-Nissen* J; Enzymic Hydrolysis of Food proteins; Elsevier Applied Science Publishers, 1986] was determined by reaction of the supernatant with OPA (ortho-phtaldialdehyde, Sigma). For the OPA reagent, 160mg of OPA was dissolved in 4ml ethanol and transferred to a 200 ml volumetric flask containing a solution of 7.62 g di-sodium tetraborate decahydrate and 200 mg Sodium dodecylsulphate and 176 mg dithiothreitol and the flask was filled to the mark with water. The reagent is light sensitive.

25 µl of suitably diluted supernatant was mixed with 200 µl OPA reagent in a microtiter plate well and allowed to react for exactly 2 minutes at 25°C. The absorbance at 340 nm was measured in a microtiter plate reader and compared to the absorbance of a 95 mM L-serine standard solution after subtraction of the blank value (water reacted with OPA-reagent). To find the true DH, the serine equivalents measured in the supematants were corrected with the factors suggested by *Adler-Nissen* for the Trinitrobenzenesulfonic acid method *[Adler-Nissen J*; Agricultural and Food Chemistry, 1979 **27** (6) 1256] which give the same response as the described OPA method. The degree of hydrolysis was calculated on basis of the total amount of protein in the hydrolysis mixture (not on basis of soluble protein).

### Results

| Hydrolysis | DH % | Glutamate mg/l |
|---|---|---|
| Minus PEP | 40 | 131 |
| Plus PEP | 43 | 171 |

As it is seen from the table, hydrolysis with the peptidoglutaminase preparation increase the DH as well as the release of glutamate.

## Claims

1. A method of obtaining from a proteinaceous substrate of vegetable origin a hydrolysate enriched in free glutamic acid and/or peptide bound glutamic acid residues, which method comprises the steps of
(i) subjecting the substrate to a deamidation process by subjecting the substrate to the action of a peptidoglutaminase or a transglutaminase; and
(ii) subjecting the substrate to the action of a specific acting proteolytic enzyme.

2. The method according to claim 1, in which the transglutaminase is derived from an Oomycete, including a strain of *Phytophthora,* in particular *Phytpphthora cactorum, a* strain of *Pythium,* in particular *Pythium irregulare, Pythium sp., Pythium intermedium, Pythium ultimum,* and *Pythium periilum* (or *Pythium periplocum).*

3. The method according to claim 1, in which the transglutaminase is of bacterial origin and is preferably derived from a strain of *Bacillus,* in particular *Bacillus subtilis,* a strain of *Streptoverticillium,* in particular *Streptoverticillium mobaroensis, Streptoverticillium griseocameum,* and *Streptoverticillium cinnamoneum,* and a strain of *Streptomyces.* in particular *Streptomyces lydicus.*

4. The method according to claim 1, the peptidoglutaminase is a peptidoglutaminase I (peptidyl-glutaminase; EC 3.5.1.43), or a peptidoglutaminase II (protein-glutamine glutaminase. EC 3.5.1.44), or a mixture hereof.

5. The method according to either of claims 1 and 4, in which the peptidoglutaminase is derived from a strain of *Aspergillus,* in particular a strain of *Aspergillus japonicus,* a strain of *Bacillus,* in particular a strain of *Bacillus circulans,* a strain of *Cryptococcus,* in particular a strain of *Cryptococcus albidus,* or a strain of *Debaryomyces,* in particular a strain of *Debaryomyces kloecheri.*

6. The method according to any of claims 1, 4 and 5, in which the peptidoglutaminase is added to the substrate in amounts in the range of from 0.01 to 100.000 PGase Units per 100 g of substrate, in particular in the range of from 0.1 to 10.000 PGase Units per 100 g of substrate.

7. The method according to any of claims 1-6, in which the specific acting proteolytic enzyme is an endo-peptidase such as
(i) a glutamyl endopeptidase (EC 3.4.21.19);
(ii) a lysyl endopeptidase (EC 3.4.21.50);
(iii) a leucyl endopeptidase (EC 3.4.21.57);
(iv) a glycyl endopeptidase (EC 3.4.22.25);
(v) a prolyl endopeptidase (EC 3.4.21.26);
(vi) trypsin (EC 3.4.21.4); or
(vii) a peptidyl-Asp metalloendopeptidase (EC 3.4.24.33).

8. The method according to claim 7, in which the glutamyl endopeptidase of (i) is derived from a strain of *Bacillus,* in particular *Bacillus licheniformis* and *Bacillus subtilis,* a strain of *Staphylococcus,* In particular *Staphylococcus aureus,* a strain of *Streptomyces,* In particular *Streptomyces thermovulgaris* and *Streptomyces griseus,* or a strain of *Actinomyces sp.*

9. The method according to claim 7, in which the lysyl endopeptidase of (ii) is derived from a strain of *Achromobacter,* in particular *Achromobacter lyticus,* a strain of *Lysobacter,* in particular *Lysobacter enzymogenes,* or a strain of *Pseudomonas,* in particular *Pseudomonas aeruginosa.*

10. The method according to claim 7, in which the glycyl endopeptidase of (iv) is derived from the papaya plant *(Carica papaya).*

11. The method according to claim 7, in which the prolyl endopeptidase of (v) is derived from a strain of *Flavobacterium.*

12. The method according to claim 7, in which the peptidyl-Asp metalloendopeptidase (EC 3.4.24.33) of (vii) is derived from a strain of *Pseudomonas,* in particular *Pseudomonas fragi.*

13. The method according to any of claims 1-6, in which the specific acting proteolytic enzyme is an exo-peptidase enzyme.

14. The method according to claim 13, in which the exo-peptidase is an aminopeptidase such as
(i) a leucyl aminopeptidase (EC 3.4.11.1); or
(ii) a tripeptide aminopeptidase (EC 3.4.11.4).

15. The method according to claim 13, in which the exo-peptidase is a carboxypeptidase such as
(i) a proline carboxypeptidase (EC 3.4.16.2);
(ii) a carboxypeptidase A (EC 3.4.17.1);
(iii) a carboxypeptidase B (EC 3.4.17.2):
(iv) a carboxypeptidase C (EC 3.4.16.5);
(v) a carboxypeptidase D (EC 3.4.16.6);
(vi) a lysine(arginine) carboxypeptidase (EC 3.4.17.3);
(vii) a glycine carboxypeptidase (EC 3.4.17.4);
(viii) an alanine carboxypeptidase (EC 3.4.17.6);
(ix) a glutamate carboxypeptidase (EC 3.4.17.11);
(x) a peptidyl-dipeptidase A (EC 3.4.15.1); or
(xi) a peptidyl-dipeptidase (EC 3.4.15.5).

16. The method according to claims 1. of obtaining from a proteinaceous substrate a hydrolysate enriched in glutamic acid, which method comprises the steps of
(i) subjecting the substrate to the action a peptidoglutaminase; and
(ii) subjecting the substrate to the action of a proteolytic enzyme preferentially cleaving glutamoyl-peptide bonds (i.e. a glutamyl endopeptidase; EC 3.4.21.19)

17. The method according to any of claims 1-16, in which the specific acting proteolytic enzyme is added to the substrate in amounts in the range of from 0.05 to 15 CPU/100 g of substrate, in particular in the range of from 0.1 to 5 CPU/100 g of substrate.

18. The method according to any of claims 1-17, in which step (I) and step (ii) of Claim 1 is-accomplished simultaneously.

19. The method according to any of claims 1-17, in which step (ii) of Claim 1 is accomplished subsequent to step (i) of Claim 1.

20. The method according to any of claims 1-19, which method comprises the additional step of
(iii) subjecting the substrate to the action of one or more unspecific acting endo- and/or exo-peptidase enzymes.

21. The method according to claim 20, in which steps (i), (ii) and (iii) are accomplished simultaneously.

22. The method according to claim 20, in which step (iii) is accomplished subsequent to steps (i) - (ii).

23. The method according to any of claims 20-22, in which the unspecific acting endo- and/or exo-peptidase enzyme of step (iii) is derived from a strain of *Aspergillus,* in particular a strain of *Aspergillus niger,* a strain of *Aspergillus oryzae,* or a strain of *Aspergillus soyae,* or a strain of *Bacillus,* in particular a strain of *Bacillus amyloliquefaciens,* a strain of *Bacillus lentus,* a strain of *Bacillus licheniformis* or a strain of *Bacillus subtilis.*

24. The method according to any of claims 20-23, in which the unspecific acting endo- and/or exo-peptidase enzyme is added to the substrate in amounts in the range of from 0.05 to 15 CPU/100 g of substrate, in particular in the range of from 0.1 to 5 CPU/100 g of substrate, or in amounts in the range of from 0.001 to 0.5 AU/100 g of substrate, in particular in the range of from 0.01 to 0.1 AU/100 g of substrate.

25. The method according to any of claims 1-24. in which the proteinaceous substrate of vegetable origin, is soy protein, grain protein, e.g. wheat gluten, com gluten, barley, rye, oat, rice, zein, cotton seed protein, rape seed protein, peanut, alfalfa protein, pea protein, fabaceous bean protein, sesame seed protein, or sunflower.

## Patentansprüche

1. Verfahren zum Erhalt eines Hydrolysats, das an freier Glutaminsäure und/oder an Peptid-gebundenen Glutaminsäure-Resten angereichert ist, aus einer proteinartigen Substanz vegetabilen Ursprungs, wobei das Verfahren die Schritte umfasst:
(i) Durchführung eines Deaminierungsverfahrens mit dem Substrat durch Unterziehen des Substrats der Wirkung einer Peptidoglutaminase oder einer Transglutaminase; und
(ii) Unterziehen des Substrats der Wirkung eines spezifisch wirkenden proteolytischen Enzyms.

2. Verfahren nach Anspruch 1, wobei die Glutaminase aus einer Oomycete stammt, einschließlich eines Stamms von *Phytophthora,* insbesondere *Phytophthora cactorum,* eines Stamms von *Pythium,* insbesondere *Phythium irregulare, Pythium sp., Pythium intermedium, Pythium ultimum* und *Pythium periilum* (oder *Pythium periplocum).*

3. Verfahren nach Anspruch 1, wobei die Glutaminase bakteriellen Ursprungs ist und vorzugsweise aus einem Stamm von *Bracillus,* insbesondere *Bacillus subtilis,* einem Stamm von *Streptoverticillium,* insbesondere *Streptoverticillium mobaraensis, Streptoverticillium griseocameum* und *Streptoverticillium cinnamoneum,* und einem Stamm von *Streptomyces,* insbesondere *Streptomyces lydicus* stammt.

4. Verfahren nach Anspruch 1, wobei die Peptidoglutaminase eine Peptidoglutaminase I (Peptidylglutaminase; EC 3.5.1.43) oder eine Peptidoglutaminase II (Protein-Glutaminglutaminase; EC 3,5.1.44) oder ein Gemisch davon ist.

5. Verfahren nach einem der Ansprüche 1 oder 4, wobei die Peptidoglutaminase aus einem Stamm von *Aspergillus,* insbesondere einem Stamm von *Aspergillus japonicus,* einem Stamm von *Bacillus,* insbesondere einem Stamm von *Bacillus circulans,* einem Stamm von *Cryptococcus,* insbesondere einem Stamm von *Cryptococcus albidus* oder einem Stamm von *Debaryomyces,* insbesondere einem Stamm von *Debaryomyces kloecheri* stammt.

6. Verfahren nach einem der Ansprüche 1, 4 und 5, wobei die Peptidoglutaminase dem Substrat in Mengen im Bereich von 0,01 bis 100.000 PGase-Einheiten pro 100 g Substrat, insbesondere im Bereich von 0,1 bis 10.000 PGase-Einheiten pro 100 g Substrat zugesetzt wird.

7. Verfahren nach einem der Ansprüche 1 bis 6, wobei das spezifisch wirkende proteolytische Enzym eine Endopeptidase ist, wie
(i) eine Glutamylendopeptidase (EC 3.4.21.19);
(ii) eine Lysylendopeptidase (EC 3.4.21.50);
(iii) eine Leucylendopeptidase (EC 3.4.21.57);
(iv) eine Glycylendopeptidase (EC 3.4.22.25);
(v) eine Prolylendopeptidase (EC 3.4.21.26);
(vi) Trypsin (EC 3.4.21.4); oder
(vii) eine Poptidyl-Asp-Metalloendopeptidase (EC 3.4.24.33).

8. Verfahren nach Anspruch 7, wobei die Glutamylendopeptidase von (i) aus einem Stamm von *Bacillus,* insbesondere *Bacillus licheniformis* und *Bacillus subtilis,* einem Stamm von *Staphylococcus,* insbesondere *Staphylococcus aureus,* einem Stamm von *Streptomyces,* insbesondere *Streptomyces thermovulgaris* und *Streptomyces griseus* oder einem Stamm von *Actinomyces sp.* stammt.

9. Verfahren nach Anspruch 7, wobei die Lysylendopeptidase von (ii) aus einem Stamm von *Achromobacter,* insbesondere *Achromobacter lyticus,* einem Stamm von *Lysobacter,* insbesondere *Lysobacter enzymogenes,* oder einem Stamm von *Pseudomonas,* insbesondere *Pseudomonas aeruginosa* stammt.

10. Verfahren nach Anspruch 7, wobei die Glycylendopcptidase aus (iv) aus der Papayapflanze *(Carica Papaya)* stammt.

11. Verfahren nach Anspruch 7, wobei die Prolylendopeptidase aus (v) aus einem Stamm von *Flavobacterium* stammt.

12. Verfahren nach Anspruch 7, wobei die Peptidyl-Asp-Metalloendopeptidase (EC 3.4.24.33) von (vii) aus einem Stamm von *Pseudomonas,* insbesondere *Pseudomonas fragi* stammt.

13. Verfahren nach einem der Ansprüche 1 bis 6, wobei das spezifisch wirkende proteolytische Enzym ein Exopeptidaseenzym ist.

14. Verfahren nach Anspruch 13, wobei die Exopeptidase eine Aminopeptidase ist, wie
(i) eine Leucylaminopeptidase (EC 3.4.11.1); oder
(ii) eine Tripeptidaminopeptidase (EC 3.4.11.4).

15. Verfahren nach Anspruch 13, wobei die Exopeptidase eine Carboxypeptidase ist, wie
(i) eine Prolincarboxypeptidase (EC 3.4.16.2);
(ii) eine Carboxypeptidase A (EC 3.4.17.1);
(iii) eine Carboxypeptidase B (EC 3.4.17.2);
(iv) eine Carboxypeptidase C (EC 3.4.16.5);
(v) eine Carboxypeptidase D (EC 3.4.16.6);
(vi) eine *Lysin(Arginin)*carboxypeptidase (EC 3.4.17.3);
(vii) eine Glycincarboxypeptidase (EC 3.4.17.4);
(viii) eine Alanincarboxypeptidase (EC 3.4.17.6);
(ix) eine Glutamatcarboxypeptidase (EC 3.4.17.11);
(x) eine Peptidyldipeptidase A (EC 3.4.15.1); oder
(xi) eine Peptidyldipeptidase (EC 3.4.15.5) ist.

16. Verfahren nach Anspruch 1 zum Erhalt eines Hydrolysais, das an Glutaminsäure angereichert ist, aus einem proteinartigen Substrat, wobei das Verfahren die Schritte umfasst:
(i) Unterziehen des Substrats der Wirkung einer Peptidoglutaminase; und
(ii) Unterziehen des Substrats der Wirkung eines proteolytischen Enzyms, das vorzugsweise Glutamoyl-Peptidbindungen spaltet (d.h. eine Glutamylendopeptidase; EC 3.4.21.19).

17. Verfahren nach einem der Ansprüche 1-16, wobei das spezifisch wirkende proteolytische Enzym dem Substrat in Mengen im Bereich von 0,05 bis 15 CPU/100 g Substrat, insbesondere im Bereich von 0,1 bis 5 CPU/100 g Substrat zugesetzt wird.

18. Verfahren nach einem der Ansprüche 1-17, wobei Schritt (i) und (ii) von Anspruch 1 gleichzeitig durchgeführt werden.

19. Verfahren nach einem der Ansprüche 1-17, wobei Schritt (ii) von Anspruch 1 im Anschluss an Schritt (i) von Anspruch 1 durchgeführt wird.

20. Verfahren nach einem der Ansprüche 1-19, wobei das Verfahren den zusätzlichen Schritt umfasst
(iii) Unterziehen des Substrats der Wirkung von einer oder mehreren unspezifisch wirkenden Endo- und/oder Exopeptidaseenzymen.

21. Verfahren nach Anspruch 20, wobei die Schritte (i), (ii) und (iii) gleichzeitig durchgerührt werden.

22. Verfahren nach Anspruch 20, wobei Schritt (iii) nach den Schritten (i)-(ii) durchgeführt wird.

23. Verfahren nach einem der Ansprüche 20-22, wobei das unspezifisch wirkende Endo- und/oder Exopeptidaseenzym von Schritt (iii) aus einem Stamm von *Aspergillus,* insbesondere einem Stamm von *Aspergillus niger,* einem Stamm von *Aspergillus oryzae,* oder einem Stamm von *Aspergillus soyae* oder einem Stamm von *Bacillus,* insbesondere einem Stamm von *Bacillus amyloliquefaciens,* einem Stamm von *Bacillus Lentus,* einem Stamm von *Bacillus licheniformis* oder einem Stamm von *Bacillus subtilis* stammt.

24. Verfahren nach einem der Ansprüche 20-23, wobei das unspezifisch wirkende Endo- und/oder Exopeptidascenzym dem Substrat in Mengen im Bereich von 0,05 bis 15 CPU/100 g Substrat, insbesondere im Bereich von 0,1 bis 5 CPU/100 g Substrat oder in Mengen im Bereich von 0,001 bis 0,5 AU/100 g Substrat, insbesondere im Bereich von 0,01 bis 0,1 AU/100 g Substrat zugesetzt wird.

25. Verfahren nach einem der Ansprüche 1-24, wobei das proteinartige Substrat vegetabilen Ursprungs Sojaprotein, Getreideprotein, z.B. Weizengluten, Maisgluten, Gerste-, Roggen-, Hafer-, Reis-, Zein-, Baumwollsamenprotein, Rapssamenprotein, Erdnuss-, Alfalfaprotein, Erbsenprotein, bohnenartiges Bohnenprotein, Sesamsamenprotein oder Sonnenblumenprotein ist.

## Revendications

1. Procédé d'obtention à partir d'un substrat protéique d'origine végétale d'un hydrolysat enrichi en résidus acide glutamique libre et/ou acide glutamique lié à un peptide, lequel procédé comprend les étapes consistant à
(i) soumettre le substrat à un procédé de désamidation en soumettant le substrat à l'action d'une peptidoglutaminasc ou d'une transglutaminase ; et
(ii) soumettre le substrat à l'action d'une enzyme protéolytique agissant spécifiquement.

2. Procédé selon la revendication 1, dans lequel la transglutaminasc dérive d'un Oomycète, dont une souche de *Phytophthora,* en particulier *Phytophthora cactorum,* une souche de *Pythium,* en particulier *Pythium irregulare, Pythium sp., Phytium intermedium, Pythium ultimum,* et *Pythium periilum* (ou *Pythium periplocum).*

3. Procédé selon la revendication 1, dans lequel la transglutaminase est d'origine bactérienne et dérive de préférence d'une souche de *Bacillus,* en particulier *Bacillus subtilis,* une souche de *Streptoverticillium,* en particulier *Streptoverticilium mobaraensis, Streptoverticillium griseocameum,* et *Streptoverticillium cinnamaneum,* et une souche de *Streptomyces,* en particulier *Streptomyces lydicus.*

4. Procédé selon la revendication 1, dans lequel la peptidoglutaminase est une peptidoglutaminase I (peptidyle-glutaminase ; EC 3.5.1.43), ou une peptidoglutaminase II (protéine-glutamine glutaminase ; EC 3.5.1.44), ou un mélange de celles-ci.

5. Procédé selon l'une des revendications 1 et 4, dans lequel la peptidoglutaminase est dérivée d'une souche *d'Aspergillus,* en particulier une souche *d'Aspergillus japonicus,* une souche de *Bacillus,* en particulier une souche de *Bacilluss circulans,* une souche de *Cryptococcus,* en particulier une souche de *Cryptococcus albidus,* ou une souche de *Debaryomyces,* en particulier une souche de *Debaryomyces kloecheri.*

6. Procédé selon l'une quelconque des revendications 1, 4 et 5, dans lequel on ajoute la peptidoglutaminase au substrat en quantités dans la gamme allant de 0,01 à 100 000 unités PGase pour 100 g de substrat, en particulier dans la gamme allant de 0,1 à 10 000 unités PGase pour 100 g de substrat.

7. Procédé selon l'une quelconque des revendications 1 à 6, dans lequel l'enzyme protéolytique agissant spécifiquement est une endo-peptidase telle que
(i) une glutamyle endopeptidase (EC 3.4.21.19);
(ii) une lysyle endopeptidase (EC 3.4.21.50) ;
(iii) une leucyle endopeptidase (EC 3.4.21.57) ;
(iv) une glycyle endopeptidase (EC 3.4.22.25);
(v) une prolyle endopeptidase (EC 3.4.21.26) ;
(vi) la trypsine (EC 3.4.21.4) ; ou
(vii) une peptidyl-Asp métalloendopeptidase (EC 3.4.24.33).

8. Procédé selon la revendication 7, dans lequel la glutamyle endopeptidase de (i) dérive d'une souche de *Bacillus,* en particulier *Bacillus lichenformis* et *Bacillus subtilis,* d'une souche de *Staphylococcus aureus,* d'une souche de *Streptomyces,* en particulier *Streptomyces thermovulgaris* et *Streptomyces griseus,* ou d'une souche *d'Actinomyces sp.*

9. Procédé selon la revendication 7, dans lequel la lysyle endopeptidase de (ii) dérive d'une souche de *Achromobacter,* en particulier *Acromobacter lyticus,* une souche de *Lysobacter,* en particulier *Lysobacter enzymogenes,* ou une souche de *Pseudomonas,* en particulier *Pseudomonas aeruginosa.*

10. Procédé selon la revendication 7, dans lequel la glycyle endopeptidase de (iv) dérive de la papaye *(Carica papaya).*

11. Procédé selon la revendication 7, dans lequel la prolyle endopeptidase de (v) dérive d'une souche de *Flavobacterium.*

12. Procédé selon la revendication 7, dans lequel la peptidyl-Asp métalloendopeptidase (EC 3.4.24.33) de (vii) dérive d'une souche de *Pseudomonas,* en particulier *Pseudomona fragi.*

13. Procédé selon l'une quelconque des revendications 1 à 6, dans lequel l'enzyme protéolytique agissant spécifiquement est une enzyme exo-peptidase.

14. Procédé selon la revendications 13, dans lequel l'exo-peptidase est une aminopeptidase telle que
(i) une leucyle aminopeptidase (EC 3.4.11.1) ; ou
(ii) une tripeptide aminopeptidase (EC 3.4.11.4).

15. Procédé selon la revendication 13, dans lequel l'exo-peptidase est une carboxypeptidase telle que
(i) une proline carboxypeptidase (EC 3.4.16.2) ;
(ii) une carboxypeptidase A (EC 3.4.17.1) ;
(iii) une carboxypeptidase B (EC 3.4.17.2) ;
(iv) une carboxypeptidase C (EC 3.4.16.5) ;
(v) une carboxypeptidase D (EC 3.4.16.6) ;
(vi) une lysine (arginine) carboxypeptidase (EC 3.4.17.3) ;
(vii) une glycine carboxypeptidase (EC 3.4.17.4);
(viii) une alanine carboxypeptidase (EC 3.4.17.6) ;
(ix) une glutamate carboxypeptidase (EC 3.4.17.11);
(x) une peptidyle-dipeptidase A (EC 3.4.15.1) ;
(xi) une peptidyle-dipeptidase (EC 3.4.15.5) ;

16. Procédé selon la revendication d'obtention à partir d'un substrat protéique d'un hydrolysat enrichi en acide glutamique, lequel procédé comprend les étapes consistant à
(i) soumettre le substrat à l'action d'une peptidoglutaminase ; et
(ii) soumettre le substrat à l'action d'une enzyme protéolytique clivant de préférence les liaisons glutamoyle-peptide (c'est à dire une glutamyle endopeptidase ; EC 3.4.21.19).

17. Procédé selon l'une quelconque des revendications 1 à 16, dans lequel l'enzyme protéolytique agissant spécifiquement est ajoutée au substrat en quantités dans la gamme allant de 0,05 à 15 CPU/100 g de substrat, en particulier dans la gamme allant de 0,1 à 5 CPU/100 g de substrat ;

18. Procédé selon l'une quelconque des revendications 1 à 17, dans lequel on effectue simultanément l'étape (i) et l'étape (ii) de la revendication 1.

19. Procédé selon l'une quelconque des revendications 1 à 17, dans lequel on effectue l'étape (ii) de la revendication 1 à la suite de l'étape (i) de la revendication 1.

20. Procédé selon l'une quelconque des revendications 1 à 19, lequel procédé comprend l'étape additionnelle consistant à
(iii) soumettre le substrat à l'action d'une ou de plusieurs enzymes endo- et/ou exo-peptidase agissant non spécifiquement.

21. Procédé selon la revendication 20, dans lequel on effectue simultanément les étapes (i), (ii) et (iii).

22. Procédé selon la revendication 20, dans lequel on effectue l'étape (iii) à la suite des étapes (i)-(ii).

23. Procédé selon l'une quelconque des revendications 20 à 22, dans lequel l'enzyme cndo- et/ou exo-peptidase de l'étape (iii) agissant non spécifiquement dérive d'une souche *d'Aspergillus,* en particulier une souche *d'Aspergillus niger,* une souche *d'Aspergillus oryzae,* ou une souche de *Aspergillus soyae,* ou d'une souche de *Bacillus,* en particulier une souche de *Bacillus amyloliquefaciens,* une souche de *Bacillus lentus,* une souche de *Bacillus licheniformis* ou une souche de *Bacillus subtilis.*

24. Procédé selon l'une quelconque des revendications 20 à 23, dans lequel on ajoute l'enzyme endo- ou exo-peptidasc agissant non spécifiquement au substrat en quantités dans la gamme allant de 0,05 à 15 CPU/100 g de substrat, en particulier dans la gamme allant de 0,1 à 5 CPU/100 g de substrat, ou en quantités dans la gamme allant de 0,001 à 0,5 AU/100 g de substrat, en particulier dans la gamme allant de 0,01 à 0,1 AU/100 g de substrat.

25. Procédé selon l'une quelconque des revendications 1 à 24, dans lequel le substrat protéique d'origine végétale, est une protéine de soja, une protéine de grain, par exemple le gluten de blé, le gluten de mais, une protéine d'orge, de seigle, d'avoine, de riz, de zéine, de graine de coton, une protéine de graine de colza, une protéine d'arachide, de luzerne, une protéine de pois, une protéine de haricot, une protéine de graine de sésame ou de tournesol.
